# EUROPEAN PATENT APPLICATION

(11) **EP 3 651 455 A1**
(43) Date of publication of application: **13.05.2020**
(21) Application number: 19749170.7
(22) Date of filing: 26.03.2019
(51) Int. Cl.: H04N 7/18

(54) **METHOD FOR ARRANGING SECURITY PATROL ROUTE AND COMPUTER STORAGE MEDIUM**

(30) Priority: 19.09.2018 CN 201811092947
(71) Applicant: Gosuncn Technology Group Co., Ltd., Guangzhou City, Guangdong 510670 (CN)
(72) Inventor: CHEN, Shenghui, Guangzhou City, Guangdong 510670 (CN); XU, Xiaohong, Guangzhou City, Guangdong 510670 (CN); XU, Guanjie, Guangzhou City, Guangdong 510670 (CN); WANG, Bo, Guangzhou City, Guangdong 510670 (CN); YANG, Huaming, Guangzhou City, Guangdong 510670 (CN); HU, Ying, Guangzhou City, Guangdong 510670 (CN); ZHANG, Yongtao, Guangzhou City, Guangdong 510670 (CN); NING, Xiwan, Guangzhou City, Guangdong 510670 (CN); YU, Xiang, Guangzhou City, Guangdong 510670 (CN); HUANG, Tongyu, Gulou District, Nanjing City, Jiangsu Province 210036 (CN); WANG, Gang, Guangzhou City, Guangdong 510670 (CN); SONG, Yibing, Guangzhou City, Guangdong 510670 (CN); HOU, Yuqing, Guangzhou City, Guangdong 510670 (CN); LIU, Shuangguang, Guangzhou City, Guangdong 510670 (CN)
(74) Representative: Meyer, Thorsten
(86) International application number: PCT/CN2019/079613
(87) International publication number: WO 2020/057083

(57) **Abstract**

A guard route security method and a computer readable storage medium are provided. The method includes receiving positioning information of a security guided vehicle and generating a security guided vehicle track; searching a low-position camera and a high-position camera around the security guided vehicle according to the positioning information, and feeding back searching information; and turning on the high-position camera to trace and monitor the security guided vehicle according to the searching information. According to the guard route security method, the security guided vehicle is shot and monitored at a high-position camera monitor to achieve a follow-up control of the security guided vehicle with the high-position cameras, which is convenient for the security guards to quickly learn the surrounding environment and carry out security work for guard route more intuitively and effectively.

## Description

### FIELD OF THE INVENTION

The present invention relates to a technology of guard route security, and in particular to a guard route security method and a computer readable storage medium.

### BACKGROUND OF THE INVENTION

In the existing guard route security, a security command center is usually informed with a position of the security guided vehicle by intercom in real time, and then checks the surrounding video around the security guided vehicle through a two-dimensional map according to the talkback information, so as to conduct the security command. Another option is adding a 4G image transmission device with GPS positioning in the security guided vehicle, in such a way, a real-time video of the security guided vehicle is transmitted back to the command center, and the position of the security guided vehicle is displayed in real time on the two-dimensional or three-dimensional map, and the real-time track is displayed as well. After the GPS positioning information sent back by the security guided vehicle is received by the command center, the surrounding cameras are automatically acquired according to the positioning information and turned on in advance, so that the surrounding environment can be quickly learned.

However, a high-position camera monitor is absent, thus follow-up control of the security guided vehicle on a high-position camera is unachievable. When the security guided vehicle enters another high-position camera range from one high-position camera range, the high-position cameras will not switched automatically, which is inconvenient to carry out security work for guard route.

### SUMMARY OF THE INVENTION

In view of the above deficiencies, the present invention provides a guard route security method, which can trace and monitor the security guided vehicle at a high-position camera monitor, and learn the surrounding environment around the security guided vehicle, thereby benefiting to carry out security work for guard route.

For solving the above problems, as a first aspect of the present invention, a guard route security method includes: receiving positioning information of a security guided vehicle and generating a security guided vehicle track; searching a low-position camera and a high-position camera around the security guided vehicle according to the positioning information, and feeding back searching information; and turning on the high-position camera to trace and monitor the security guided vehicle according to the searching information.

Accordingly, the security guided vehicle and the surrounding environment are monitored in real time by the low-position cameras, and the security guided vehicle also is shot in a high position by the high-position cameras, thus the follow-up control to the security guided vehicle is achieved, which is convenient for the security guards to quickly learn the surrounding environment and carry out security work for guard route more intuitively and effectively.

According to one embodiment of the present invention, the positioning information comprises GPS positioning information.

According to one embodiment of the present invention, the step of receiving positioning information of a security guided vehicle and generating a security guided vehicle track comprises receiving the positioning information of the security guided vehicle; and inputting the positioning information to a map, and generating the security guided vehicle track in real time on the map according to the positioning information.

According to one embodiment of the present invention, the map is a two-dimensional map or a three-dimensional map.

According to one embodiment of the present invention, said step of searching a low-position camera and a high-position camera around the security guided vehicle according to the positioning information, and feeding back searching information comprises calculating an amount of the low-position camera around the security guided vehicle at a first predetermined range according to the position information, and feeding the searching information of the low-position camera relevant to the security guided vehicle to a multi-video play window.

According to one embodiment of the present invention, the method further includes capturing the security guided vehicle and playing a real-time video of the low-position cameras around the security guided vehicle on the first multi-video play window, in real time.

According to one embodiment of the present invention, the method further includes calculating an amount of the high-position camera around the security guided vehicle at a second predetermined range according to the position information, and feeding the searching information of the high-position camera relevant to the security guided vehicle to a high-position video play window.

According to one embodiment of the present invention, the first predetermined range is from 50m to 150m, the second predetermined range is from 1000m to 2000m.

According to one embodiment of the present invention, the step of turning on the high-position camera to trace and monitor the security guided vehicle according to the searching information comprises automatically turning on the high-position camera according to the searching information received by the high-position video play window, and tracing and monitoring the security guided vehicle on the high-position camera.

According to one embodiment of the present invention, the method further includes converting GPS coordinates of the security guided vehicle to PT coordinates by a converting algorithm between GPS and PT, thereby positioning and tracking the security guided vehicle by the high-position cameras.

As a second aspect of the present invention, a computer readable storage medium includes one or more computer instructions, wherein the guard route security method mentioned above is performed when the computer instructions are run.

### BRIEF DESCRIPTION OF THE DRAWINGS

Fig. 1 is a flow chart of a guard route security method according to an embodiment of the present invention;
Fig. 2 is a schematic diagram of a security device according to an embodiment of the present invention; and
Fig. 3 is a schematic diagram of an electronic device according to an embodiment of the present invention.

Reference numerals:
Security line guard route security method 100;
Guard line security device 200; signal receiving module 210; data processing module 220; control module 230;
Electronic device 300;
Memory 310; operating system 311; application 312;
Processor 320; the network interface 330; the input device 340; the hard disk 350; and the display device 360.

### DETAILED DESCRIPTION OF ILLUSTRATED EMBODIMENTS

Specific embodiments of the present invention will be further described in detail below with reference to the drawings and embodiments. The following embodiments are intended to illustrate the invention but are not intended to limit the scope of the invention.

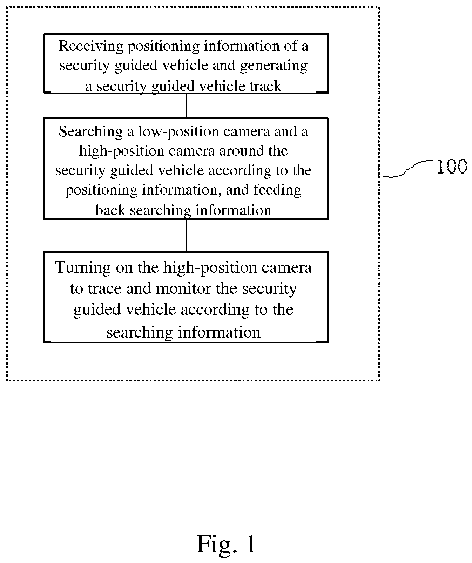

As shown in Fig. 1, the guard route security method 100 includes receiving positioning information of a security guided vehicle and generating a security guided vehicle track; searching a low-position camera and a high-position camera around the security guided vehicle according to the positioning information, and feeding back searching information; and turning on the high-position camera to trace and monitor the security guided vehicle according to the searching information.

In other words, in the method, firstly the positioning information of the security guided vehicle is received, and the positioning of the security guided vehicle is generated to create a security guided vehicle track. Then, low-position cameras and high-position cameras around the security guided vehicle are automatically searched according to the positioning information, and the searching information is fed back to control the low-position cameras to shoot the security guided vehicle and monitor the surrounding environment and the high-position cameras to follow and trace the security guided vehicle, thereby achieving a follow-up control of the security guided vehicle with the high-position cameras.

Accordingly, the security guided vehicle and the surrounding environment are monitored in real time by the low-position cameras, and the security guided vehicle also is shot in a high position by the high-position cameras, thus the follow-up control of the security guided vehicle with the high-position camera is achieved, which is convenient for the security guards to quickly learn the surrounding environment and carry out security work for guard route more intuitively and effectively.

According to some embodiments of the present invention, the position information is GPS (Global Positioning System) positioning information, which is accurate and easy to be acquired.

Preferably, the step of receiving positioning information of a security guided vehicle and generating a security guided vehicle track includes starting guard route security protection, receiving the position information of the security guided vehicle in real time, and inputting the position information of the security guided vehicle to a map so as to create the security guided vehicle track.

Further, the map can be a two-dimensional map or a three-dimensional map.

That is to say, after the GPS information of the security guided vehicle is received, the GPS information is inputted to a two-dimensional map or a three-dimensional map, thereby creating the security guided vehicle track on the map.

According to an embodiment of the present invention, the step of searching a low-position camera and a high-position camera around the security guided vehicle according to the positioning information, and feeding back searching information calculating an amount of the low-position camera around the security guided vehicle at a first predetermined range according to the position information, and feeding the searching information of the low-position camera relevant to the security guided vehicle to a multi-video play window.

According to an embodiment of the present invention, the method further includes capturing the security guided vehicle and playing a real-time video of the low-position cameras around the security guided vehicle on the first multi-video play window, in real time.

Preferably, the method further includes calculating an amount of the high-position camera around the security guided vehicle at a second predetermined range according to the position information, and feeding the searching information of the high-position camera relevant to the security guided vehicle to a high-position video play window.

As an embodiment of the present invention, the first predetermined range (distance range) is 50m-150m, and the second predetermined range (distance range) is 1000m-2000m. Therefore, the shooting effect of the low-position cameras can be ensured within the first predetermined range with the short distance, and the monitor and follow-up effect of the high-position cameras can be ensured within the second predetermined range with long distance.

Optionally, the step of turning on the high-position camera to trace and monitor the security guided vehicle according to the searching information includes: automatically turning on the high-position camera according to the searching information received by the high-position video play window, and tracing and monitoring the security guided vehicle on the high-position camera.

It should be noted that, the multi-video play window is adapted for following the security guided vehicle and playing the video captured by the low-position camera around the security guided vehicle at the first predetermined range, and the high-position video play window is adapted for following the security guided vehicle and playing the video captured by the high-position camera around the security guided vehicle at the second predetermined range. As the running of the security guided vehicle, the high-position camera can be switched automatically to follow and trace the security guided vehicle if another high-position camera that is closer to the security guided vehicle is searched out.

Further, the method includes converting GPS coordinates of the security guided vehicle to PT coordinates by means of a converting algorithm between GPS and PT, thereby positioning and tracking the security guided vehicle by the high-position cameras. Specifically, the PT coordinates are abbreviations for the pan-tilt coordinates, which represent the lateral angle and the elevation angle of the camera.

Namely, the high-position cameras can be automatically turned on when the information is received on the high-position video play window; meanwhile, the GPS coordinates of the security guided vehicle is converted to PT coordinates according to the algorithm for converting GPS to PT, and the high-position cameras are positioned to the security guided vehicle, thereby achieving a follow-up control of the security guided vehicle with the high-position cameras.

In addition, the present invention further provides a computer storage medium including one or more computer instructions, and the above guard route security method 100 is performed when the computer instructions are run.

Namely, computer programs are stored in the computer storage medium, when the computer programs are executed by a processor, the processor performs the above guard route security method 100.

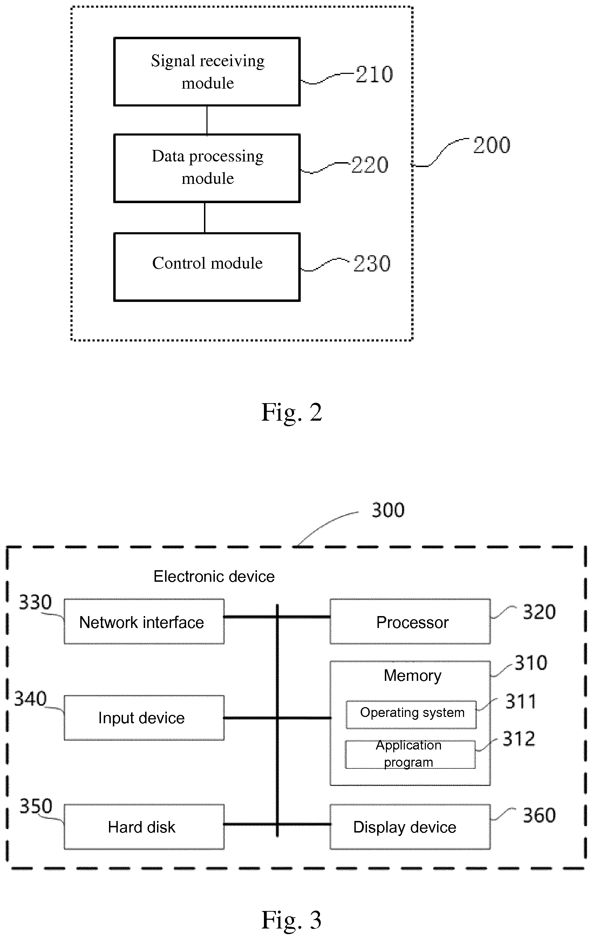

As shown in Fig. 2, the present invention further provides a guard route security device 200 including a signal receiving module 210, a data processing module 220 and a control module 230.

Specifically, the signal receiving module 210 is configured to receive positioning information of a security guided vehicle, the data processing module 220 is configured to generate a security guided vehicle track according to the positioning information, search a low-position camera and a high-position camera around the security guided vehicle according to the positioning information, and feed searching information back. The control module 230 is configured to receive the searching information and turn on the high-position camera to trace and monitor the security guided vehicle according to the searching information.

In other words, the guard route security device 200 is mainly formed by the signal receiving module 210, the data processing module 220 and the control module 230. Specifically, when a guard route security event is started, the signal receiving module 210 receives positioning information of the security guided vehicle, the data processing module 220 generates the security guided vehicle track according to the positioning information, searches a low-position camera and a high-position camera around the security guided vehicle according to the positioning information, and feeds the searching information back to the control module 230. The control module 230 receives the searching information and turns on the high-position camera to trace and monitor the security guided vehicle according to the searching information, thereby achieving a follow-up control of the security guided vehicle with the high-position cameras.

According to the guard route security device 200 of the present embodiment, the positioning information of the security guided vehicle is received by the signal receiving module 210, the security guided vehicle track is generated by the data processing module 220 which is configured to searching low-position cameras and high-position cameras around the security guided vehicle, and the high-position camera is controlled to trace and monitor the security guided vehicle by means of the control module 230. Thus the follow-up control to the security guided vehicle with a high-position camera is achieved, which is convenient for the security guards to quickly learn the surrounding environment and carry out security work for guard route more intuitively and effectively.

According to some embodiments of the present invention, the position information is GPS (Global Positioning System) positioning information, which is accurate and easy to be acquired.

Preferably, the data processing module 200 includes a first processing module configured to receiving the positioning information and transferring the positioning information to a map so as to create the security guided vehicle track.

Further, the map can be a two-dimensional map or a three-dimensional map.

Specifically, the first processing module is configured to input the GPS positioning information to a two-dimensional map or a three-dimensional map, thereby creating the security guided vehicle track on the map.

According to an embodiment of the present invention, the data processing module 200 further includes a second processing module configured to receive the positioning information and calculate an amount of the low-position camera around the security guided vehicle at a first predetermined range according to the position information, and feed the searching information of the low-position camera relevant to the security guided vehicle to a multi-video play window.

In other words, the second processing module is configured to calculate the amount of the low-position camera around the security guided vehicle at the first predetermined range (can be set) according to the position information, and feed the searching information of the low-position camera relevant to the security guided vehicle to the multi-video play window.

Further, the multi-video play window is configured to follow the security guided vehicle and playing the video of the low-position camera in the first predetermined range, so that the status of the security guided vehicle and the surrounding environment thereof can be quickly learned.

According to one embodiment of the present invention, the control module 230 further includes a third processing module configured to calculate an amount of the high-position camera around the security guided vehicle at a second predetermined range according to the position information, and feed the searching information of the high-position camera relevant to the security guided vehicle to a high-position video play window.

That is to say, the third processing module is configured to calculate the high-position camera around the security guided vehicle (the distance range can be set), and feed information of the high-position camera and the GPS positioning information to the high-position video play window. As the running of the security guided vehicle, the high-position camera can be switched automatically to follow and trace the security guided vehicle if another high-position camera that is closer to the security guided vehicle is searched out.

Further, the first predetermined range (distance range) is 50m-150m, and the second predetermined range (distance range) is 1000m-2000m. Therefore, the shooting effect of the low-position cameras can be ensured within the first predetermined range with the short distance, and the monitor and follow-up effect of the high-position cameras can be ensured within the second predetermined range with long distance.

In an embodiment of the present invention, the control module 230 is configured to automatically turn on the high-position camera according to the searching information received by the high-position video play window, and tracing and monitoring the security guided vehicle on the high-position camera.

It should be noted that, the multi-video play window is adapted for following the security guided vehicle and playing the video captured by the low-position camera around the security guided vehicle at the first predetermined range, and the high-position video play window is adapted for following the security guided vehicle and playing the video captured by the high-position camera around the security guided vehicle at the second predetermined range. As the running of the security guided vehicle, the high-position camera can be switched automatically to follow and trace the security guided vehicle if another high-position camera that is closer to the security guided vehicle is searched out.

According to an embodiment of the present invention, the control module 230 further includes a calculating module configured to convert GPS coordinates of the security guided vehicle to PT coordinates by means of a converting algorithm between GPS and PT, thereby positioning and tracking the security guided vehicle by the high-position cameras.

As illustrated in Fig. 3, the invention provides an electronic device 300 including a memory 310 for storing one or more computer instructions and a processor 320 for calling and executing said one or more computer instructions, thereby implanting the above method 100.

That is, the electronic device 300 includes a processor 320, a memory 310, and computer programs stored in the memory 310 and configured to be executed by the processor 320, and the method 100 is achieved when the processor 320 executes the computer programs.

Furthermore, as shown in Fig. 3, the electronic device 300 further includes a network interface 330, an input device 340, a hard disk 350 and a display device 360.

Each of the above interfaces and devices can be interconnected by bus architecture. The bus architecture can be a bus and bridge that can include any number of interconnects. One or more central processing units (CPU), represented by one or more processors 320, and various circuits of one or more memories represented by memory 310 are coupled together. The bus architecture can also connect various other circuits such as peripherals, voltage regulators, and power management circuits. It will be appreciated that the bus architecture is used to implement connection communication between these components. The bus architecture includes, in addition to the data bus, a power bus, a control bus, and a status signal bus, all of which are well known in the art and therefore will not be described in detail herein.

The network interface 330 is connected to the networks (e.g. Internet, LAN, etc.) to obtain data and store it in the hard disk 350.

The input device 340 is configured to receive various instructions input by the user and sends them to the processor 320. The input device 340 can include a keyboard or pointing devices (e.g. mouse, trackball, touch panel or touch screen).

The display device 360 is configured to display the result of the processor 320 executing the instructions.

The memory 310 is configured to store programs and data necessary for the operating system to run, and intermediate data calculated by the processor 320 in the calculation process.

It is to be understood that the memory 310 in the embodiments of the present invention may be a volatile memory or a non-volatile memory, or may include both volatile and non-volatile memory. The non-volatile memory may be a read only memory (ROM), a programmable read only memory (PROM), an erasable programmable read only memory (EPROM), an electrically erasable programmable read only memory (EEPROM), or Flash memory. Volatile memory can be random access memory (RAM), which acts as an external cache. The memory 310 of the apparatus and methods described herein is intended to comprise, without being limited to, these and any other suitable types of memory.

In some embodiments, the memory 310 stores the following elements, executable modules or data structures, or subsets thereof, or extension sets thereof: operating system 31 and programs 312.

Specifically, the operating system 311 includes various system programs, such as a framework layer, a core library layer, a driver layer, and the like, for implementing various basic services and processing hardware-based tasks. The application programs 312 include various applications, such as a browser, for implementing various application services. A program implementing the method of the embodiment of the present invention may be included in the application programs 312.

The method disclosed in the above embodiments of the present invention may be applied to the processor 320 or implemented by the processor 320. The processor 320 may be an integrated circuit chip with signal processing capabilities. In the implementation process, each step of the foregoing method may be completed by an integrated logic circuit of hardware in the processor 320 or instructions in a form of software. The processor 320 described above may be a general purpose processor, a digital signal processor (DSP), an application specific integrated circuit (ASIC), a field programmable gate array (FPGA) or other programmable logic devices, a discrete gate or transistor logic device, or discrete hardware, which can implement or execute the above methods, steps or logic blocks according to the embodiments of the present invention. The general purpose processor may be a microprocessor, or the processor, or any conventional processor or the like. The steps of the method disclosed in the embodiments of the present invention may be directly implemented by the hardware decoding processor, or may be performed by a combination of hardware and software modules in the decoding processor. The software module can be located in a conventional storage medium such as random access memory, flash memory, read only memory, programmable read only memory or electrically erasable programmable memory, registers, and the like. The storage medium is located in the memory 310, and the processor 320 reads the information in the memory 310 and completes the steps of the above method in combination with its hardware.

It will be appreciated that the embodiments described herein can be implemented in hardware, software, firmware, middleware, microcode, or a combination thereof. For hardware implementations, the processing unit can be implemented in one or more application specific integrated circuits (ASICs), digital signal processors (DSPs), digital signal processing devices (DSPDs), programmable logic devices (PLDs), field programmable gate arrays (FPGAs).), a general purpose processor, a controller, a microcontroller, a microprocessor, other electronic units for performing the functions described herein, or a combination thereof.

For software implementations, the techniques described herein can be implemented by modules (e.g. procedures, functions, and so on) that perform the functions described herein. The software code can be stored in memory and executed by the processor. The memory can be implemented in the processor or external to the processor.

Specifically, the processor 320 is further configured to read the computer programs to perform the method described in any of the above.

In the several embodiments provided in the present application, it should be understood that the disclosed method and apparatus may be implemented in other manners. For example, the device embodiments described above are merely illustrative. For example, the division of the unit is only a logical function division. In actual implementation, there may be another division manner, for example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be in electrical, mechanical or other forms.

In addition, each functional unit in each embodiment of the present invention may be integrated into one processing unit, or each unit may be physically included separately, or two or more units may be integrated into one unit. The above integrated unit can be implemented in the form of hardware or in the form of combinations of hardware and software.

The above-described integrated unit implemented in the form of a software functional unit can be stored in a computer readable storage medium. The above software functional unit is stored in a storage medium and includes a plurality of instructions for causing a computer device (which may be a personal computer, a server, or a network device, etc.) to perform part of the steps of the transceiving method of the various embodiments of the present invention. The foregoing storage medium includes a U disk, a mobile hard disk, a Read-Only Memory (ROM), a Random Access Memory (RAM), a disk or an optical disk, and the like, which can store program codes.

While the disclosure has been described in connection with what are presently considered to be the most practical and preferable embodiments, it is to be understood that the disclosure is not to be limited to the disclosed embodiments, but on the contrary, is intended to cover various modifications and equivalent arrangements included within the spirit and scope of the disclosure.

## Claims

1. A guard route security method, comprising steps of:
receiving positioning information of a security guided vehicle and generating a security guided vehicle track;
searching a low-position camera and a high-position camera around the security guided vehicle according to the positioning information, and feeding back searching information; and
turning on the high-position camera to trace and monitor the security guided vehicle according to the searching information.

2. The guard route security method according to claim 1, wherein the positioning information comprises GPS positioning information.

3. The guard route security method according to claim 2, wherein said step of receiving positioning information of a security guided vehicle and generating a security guided vehicle track comprises:
receiving the positioning information of the security guided vehicle; and
inputting the positioning information to a map, and generating the security guided vehicle track in real time on the map according to the positioning information.

4. The guard route security method according to claim 3, wherein the map is a two-dimensional map or a three-dimensional map.

5. The guard route security method according to claim 2, wherein said step of searching a low-position camera and a high-position camera around the security guided vehicle according to the positioning information, and feeding back searching information comprises:
calculating an amount of the low-position camera around the security guided vehicle at a first predetermined range according to the position information, and feeding the searching information of the low-position camera relevant to the security guided vehicle to a multi-video play window.

6. The guard route security method according to claim 5, further comprising capturing the security guided vehicle and playing a real-time video of the low-position cameras around the security guided vehicle on the first multi-video play window, in real time.

7. The guard route security method according to claim 5, further comprising:
calculating an amount of the high-position camera around the security guided vehicle at a second predetermined range according to the position information, and feeding the searching information of the high-position camera relevant to the security guided vehicle to a high-position video play window.

8. The guard route security method according to claim 7, wherein the first predetermined range is from 50m to 150m, the second predetermined range is from 1000m to 2000m.

9. The guard route security method according to claim 7, wherein said step of turning on the high-position camera to trace and monitor the security guided vehicle according to the searching information comprises:
automatically turning on the high-position camera according to the searching information received by the high-position video play window, and tracing and monitoring the security guided vehicle on the high-position camera.

10. The guard route security method according to claim 9, further comprising:
converting GPS coordinates of the security guided vehicle to PT coordinates by a converting algorithm between GPS and PT, thereby positioning and tracking the security guided vehicle by the high-position cameras.

11. A guard route security device, comprising: a processor, a memory, and computer programs stored in the memory and configured to be executed by the processor, wherein the guard route security method according to any one of claims 1-10 is achieved when the processor executes the computer programs.

12. A computer readable storage medium, comprising one or more computer instructions, wherein the guard route security method according to any one of claims 1-10 is performed when the computer instructions are run.
